# EUROPEAN PATENT SPECIFICATION

(11) **EP 1 791 381 B1**
(45) Date of publication and mention of the grant of the patent: **22.07.2015**
(21) Application number: 05292500.5
(22) Date of filing: 25.11.2005
(51) Int. Cl.: H04W 4/16, H04W 4/02

(54) **Location based control of call delivery in a radiocommunication network**
Ortsabhängige Steuerung von Rufzustellung in einem Mobilfunknetzwerk
Commande de la delivrance d'appels basé sur l'information de localisation dans un réseau cellulaire de radiocommunication

(43) Date of publication of application: 30.05.2007
(73) Proprietor: Apple Inc., Cupertino, CA 95014 (US)
(72) Inventor: Lucidarme, Thierry, 78180 Montigny-Le-Bretonneux (FR); Lescuyer, Pierre, 78180 Montigny-le-Bretonneux (FR)
(74) Representative: Lang, Johannes

(56) References cited:
- EP-A- 1 416 756
- EP-A- 1 435 749
- WO-A-01/20945
- CA-A1- 2 172 564
- US-A1- 2002 049 913
- US-B1- 6 654 589

## Description

The present invention relates to the control of calls in a radiocommunication network.

A radiocommunication network is generally arranged for routing incoming calls to radio terminals and out-going calls from radio terminals. The incoming calls can originate from radio terminals or fixed terminals. Similarly, the out-going calls can terminate to radio terminals or fixed terminals.

Although the signalling used for such routing may differ between the incoming calls and the out-going calls, the equipments and interfaces of the radiocommunication network involved are often the same for both directions.

While the communication service rendered by such radiocommunication network is highly appreciated, it can, under certain circumstances, have undesirable or even harmful effects.

In particular, with the development of terrorism all over the world, it is been observed that radio terminals could be used as detonators for bombs. Indeed, a radio terminal can easily be coupled to a bomb, in such a way that an electrical signal generated in the terminal due to the reception of a call, can trigger the bomb explosion, e.g. by making the buzzer of the terminal vibrate. In this way, bombs can be remotely controlled through simple calls to the radio terminals they are coupled to.

In recent attacks, it appeared that several bombs exploded quasi simultaneously or with low delays. Knowing that, it would be highly desirable to prevent new explosions once a first bomb attack has occurred.

A simple way of doing so is to completely turn off the radiocommunication network over a whole city for instance, so as to ensure that no call will trigger a further bomb explosion.

However, this implies a total absence of telephone service for mobile users, which can be prejudicial. For example, radio terminals could be the only means available for calling for emergency.

Document WO 01/20945 discloses an area-dependent call routing wherein at least some of the incoming calls are not routed to the terminals located therein while outgoing calls are routed normally.

An object of the present invention is to overcome the above mentioned problem.

Another object is to limit the use of a radiocommunication network in a not too prejudicial way.

Another object is to forbid the possible bad use of a radiocommunication network without suspending its use for good reasons.

The invention thus proposes a method for controlling calls in a radiocommunication network arranged for routing incoming calls to radio terminals and out-going calls from radio terminals. Responsive to a command following the detection of an event, at least some of the incoming calls intended for radio terminals located in at least one determined area are prevented from being routed to said radio terminals by the radiocommunication network, while the out-going calls from radio terminals located in said at least one determined area keep on being routed by the radiocommunication network.

In this way, it is possible to inhibit some or all the incoming calls in a particular area served by the radiocommunication network, on demand. Thus, the called terminal does not receive any radio signal which could result in the generation of an electrical signal in the terminal, which could be used, in its turn, to activate a function of the terminal, such as the ringing tone, the buzzer, etc. But, the network is still available to make out-going calls.

In a first embodiment of the invention, the incoming calls can be prevented from being routed by a core network of the radiocommunication network, whereas in a second embodiment of the invention, the incoming calls can be prevented from being routed by a radio access network of the radiocommunication network.

Advantageously, a paging message to be broadcasted in a paging area is usually transmitted prior to the routing of an incoming call intended for a radio terminal located in said paging area. In this case, no paging message is transmitted when the paging area is at least part of said at least one determined area.

The invention also proposes a radiocommunication network comprising means for implementing the above mentioned method.

The invention also proposes an equipment of a radiocommunication network comprising means for participating in the implementation of the above mentioned method.

The equipment can belong to a core network or to a radio access network of the radiocommunication network.

The preferred features of the above aspects which are indicated by the dependent claims may be combined as appropriate, and may be combined with any of the above aspects of the invention, as would be apparent to a person skilled in the art.
- FIG.1 is an exemplary architecture of a radiocommunication system in which the invention can take place ;
- FIG.2 shows messages exchanged in the system of FIG.1 for a call setup during normal operation of the system ;
- FIG.3 is an exemplary architecture of a system having a radiocommunication part and an IP multimedia part, in which the invention can take place ;
- FIG.4 shows messages exchanged in the system of FIG.3 for the establishment of a session during normal operation of the system.

The invention is illustrated here in its application to a UMTS ("Universal Mobile Telecommunication System") network. Of course, it could also apply to any other radiocommunication system, such as GSM ("Global Service for Mobile communications") for instance.

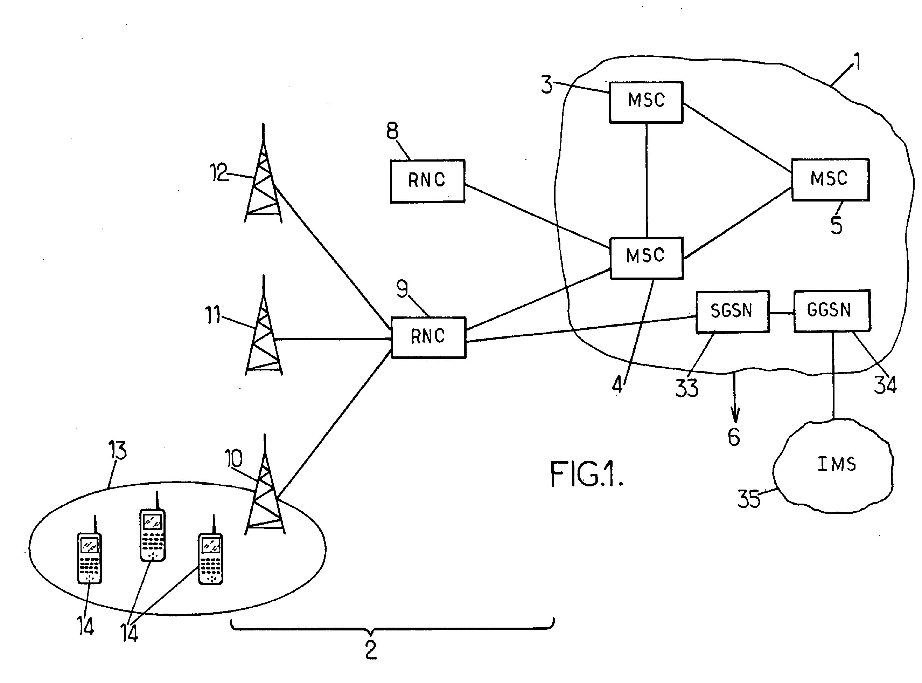

FIG.1 shows a UMTS network comprising a CN ("core network") 1 including a mesh of interconnected switches 3-5 called MSCs ("Mobile Switching Centres") and/or one or several SGSNs 33 ("Serving GPRS Support Node", where GPRS means "General Packet Radio Service"). The CN 1 is connected to an external network 6, which can be a fixed network such as a PSTN ("Public Switched Telephone Network") or a PDN ("Packet Data Network") for instance. On the other side, the CN 1 is connected to a RAN ("Radio Access Network") 2 including RNCs ("Radio Network Controllers") 8-9 and base stations 10-12 called Node-Bs which are each connected to an RNC (the RNC 9 in FIG.1). A GGSN ("Gateway GPRS Support Node", where GPRS means "General Packet Radio Service") 34 of the CN 1, to which the SGSN 33 is connected, can further be connected to an IMS network 35 as will be explained in an example described below.

Such system allows communications with radio terminals 14, called UEs ("User Equipments"), each radio terminal incorporating a SIM ("Subscriber Identity Module") card identifying its user.

In the example of FIG.1, three UEs 14 are under the radio coverage 13 of the Node-B 10. Under normal circumstances, the system of FIG.1 is thus capable of routing incoming calls to any one of the UEs 14 via the MSC 4, the RNC 9 and the Node-B 10. In the other direction, the system of FIG.1 is capable of routing out-going calls from any one of the UEs 14 via the Node-B 10, the RNC 9 and the MSC 4.

It must be noted that, in the present application, a "call" means any type of communication involving a radio terminal. It can thus be a communication of the CS ("Circuit Switched") type, e.g. a voice call, or a communication of the PS ("Packet Switched") type, e.g. a data transmission. A call can also designate the transmission of a short message known as SMS ("Short Message Service") from or to a radio terminal, as well known in the art, a push service, etc.

It must also be noted that, in practice, a call may be related to a subscriber rather than to a terminal, a particular subscriber being able to use different terminals. To simplify the reading of the description, the notion of terminal will be used to designate either the UE itself or the subscriber using the UE in what follows.

An incoming call, i.e. a call intended for a radio terminal served by the radiocommunication system, is preceded by a signalling phase. In the UMTS system, this signalling phase generally comprises the transmission of a paging message. This message aims at informing the radio terminal (or its user) concerned that a call is being received for it, and also at detecting precisely the location of the radio terminal so that the call can be served to it in an appropriate way, via the right Node-B in particular. Of course, other kinds of messages could be used instead or in addition to a paging message during the signalling phase.

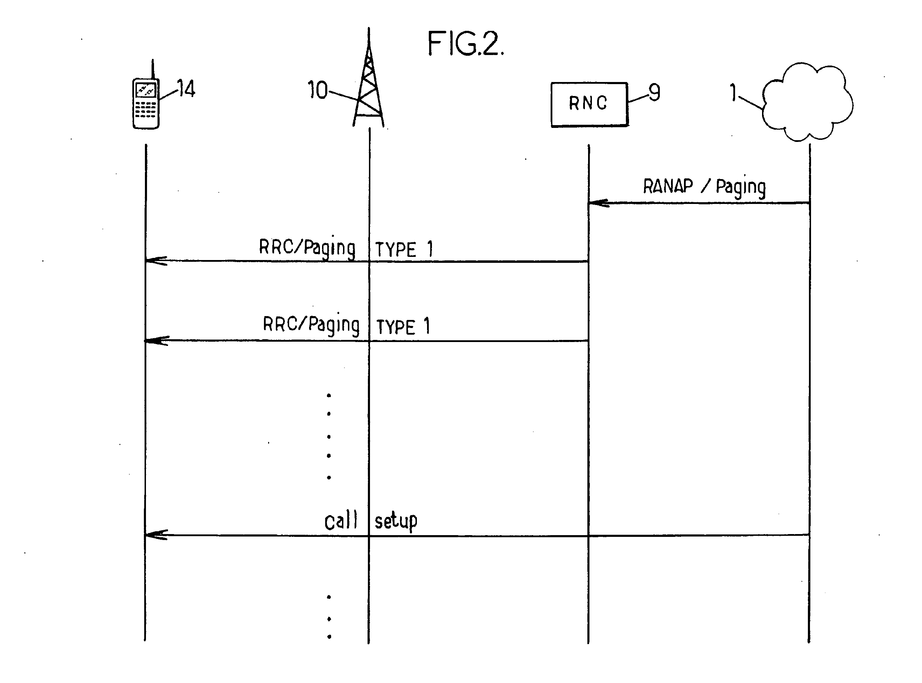

FIG.2 schematically shows the beginning of such signalling phase in the network of FIG.1. First of all, the CN 1, which knows that the UE 14 (or the subscriber using UE 14) concerned by the incoming call is located in an area under the responsibility of the RNC 9, sends a RANAP ("Radio Access Network Application Part") paging message to the RNC 9. It can also happen that the UE 14 (or the subscriber using UE 14) concerned by the incoming call is located in an area under the responsibility of several RNCs. In this case, the RANAP paging message is sent to all these RNCs by the CN 1.

This message includes an identifier of the subscriber for which the call is intended. It is detailed particularly in sections 8.15 and 9.1.23 of the technical specification TS 25.413, V3.14.0, "UTRAN lu interface RANAP signalling (Release 1999)", published in September 2003 by the 3GPP ("3rd Generation Partnership Project").

The RANAP paging message can include an indication of a paging area in which the UE 14 (or the subscriber using UE 14) is located. This paging area can be a location area LA or a routing area RA as well known in the art (see section 9.2.1.21 of the above mentioned TS 25.413). On reception of the RANAP paging message, the RNC 9 is thus informed of the area in which the UE 14 to be paged is located. In case there is no paging area indication included in the RANAP paging message, the whole RNC 9 area will be used as a paging area, which means that the paging will be broadcasted through all the Node-Bs 10-12 connected to the RNC 9.

Under normal circumstances, after having received the RANAP paging message, the RNC 9 transmits a RRC paging message so that it can be broadcasted through at least some Node-Bs connected to it. In the example illustrated in FIG.2, it has been assumed that the UE 14 called was in idle mode, i.e. it had no other communication in progress. In this case, the RRC paging message is said to be of type 1. Of course, a paging of the UE 14 is also possible when the UE 14 is already involved in a communication in progress.

The RRC paging message is detailed in sections 8.1.2 and 10.2.20 of the technical specification TS 25.331, V3.16.0, "Radio Resource Control (RRC) protocol specification, (Release 1999)", published in September 2003 by the 3GPP. It is sent on an appropriate paging occasion over a radio channel called PCCH ("Paging Control Channel"). As shown in FIG.2, the RRC paging message can be sent in several paging occasions successively to increase the probability of proper reception.

The RRC paging message is thus advantageously broadcasted to the paging area indicated by the RANAP paging message. In order that the radio terminals receiving the RRC paging message can check whether the message was intended for them (or their user), the RRC paging message contains a paging record field identifying the recipient of the message (see section 10.3.3.23 of the above mentioned TS 25.331).

The paging signalling phase as illustrated in FIG.2 is then normally followed by classical signalling exchanges until the incoming call is established with the UE 14. In case of a CS call for instance, a call setup message is thus sent from the CN 1 to the UE 14. Of course, different messages could be sent instead or in addition, depending on the type of call to be established (CS call, PS call, broadcast, SMS, etc.). The detailed signalling exchanges involved are well known by one skilled in the art and they are also fully described in the relevant UMTS technical specifications.

During the call setup, electrical signals can be generated in the called UE, that can be used internally e.g. for making its tone ring or its buzzer vibrate.

Similarly, the signalling used for establishing an out-going call from a radio terminal, although it has not been illustrated in a figure, is well known by one skilled in the art and is also fully described in the relevant UMTS technical specifications.

According to the invention, responsive to a command, the incoming calls intended for radio terminals located in at least one determined area are prevented from being routed to said radio terminals by the radiocommunication network. This can be achieved in several ways and at different levels.

In a first embodiment of the invention, the incoming calls inhibition is performed at the CN level. In this case, the inhibition command is advantageously given to the CN. For instance, MSCs, like the MSC 4 of FIGs.1 and 2, or their associated VLRs ("Visitor Location Registers") which store information related to subscribers such as their current location area, are provided with an indication of the determined area to which no incoming call must be routed. Advantageously, the determined area is defined as one paging area or a list of paging areas, e.g. one or several LAs and/or RAs.

Then, when an incoming call is detected in the CN, for instance at the MSC 4, it is checked whether or not the called subscriber is located in the determined area. This can be achieved by querying the VLR associated to the MSC 4 on whether the called subscriber is located in a LA or an RA which is whole or part of the determined area.

When the called subscriber is located in the determined area, the RANAP paging message shown in FIG.2 is not transmitted to the RNC 9. Consequently, the RNC 9 is not informed of the incoming call and cannot route it to the concerned UE 14. In contrast, the UE 14 can still make an out-going call which will be routed to the CN 1 via the Node-B 10 and the RNC 9 in a conventional way. Thus, only out-going calls are possible for this UE 14 located inside the determined area.

Alternately, the RANAP paging message could always be sent and only the following call setup message would be discarded by the CN 1, before being transmitted to the UE 14.

When the called subscriber is not located in the determined area, the RANAP paging message shown in FIG.2 is transmitted to the RNC 9 in a usual way, and the following of the call setup procedure can be performed conventionally, so as to establish the incoming call with the UE 14. In this case, of course, the UE 14 can also make an out-going call which will be routed to the CN 1 via the Node-B 10 and the RNC 9 in a conventional way. Thus, both incoming and out-going calls are possible for this UE 14 located outside the determined area.

It should be noted that the incoming calls inhibition can be performed at the CN level in the CS domain as indicated with reference to FIGs.1 and 2, but also in the PS domain. In the latter case, CN nodes of the PS domain, such as SGSNs, are in charge of the RANAP message filtering.

In a second embodiment of the invention, the incoming calls inhibition is performed at the RAN level. In this case, the inhibition command is advantageously given to the RNC. For instance, the RNC 9 of FIGs.1 and 2 is provided with an indication of the determined area to which no incoming call must be routed. Advantageously, the determined area is defined as one paging area or a list of paging areas, e.g. one or several LAs and/or RAs. Alternatively, the determined area can be the whole radio coverage of the RNC. In this case, it is sufficient to command the RNC 9 not to route any incoming call.

In this embodiment, the RNC 9 receives a RANAP paging message from the CN 1. If the RANAP paging message contains no paging area indication, the RNC 9 can simply discard it and does not transmit any RRC paging message.

If the RANAP paging message received at the RNC 9 contains a paging area indication, such as a LA or a RA, the RNC 9 checks whether this paging area is whole or part of said determined area. If the paging area is whole or part of the determined area, the RNC 9 does not transmit the RRC paging message that usually follows the reception of such RANAP paging message, by contrast with FIG.2.

Thus, the called UE 14 will not be informed of the incoming call to its attention and no signalling will reach the UE 14. Thus, the incoming call will not be established. But, the UE 14 can still make an out-going call which will be routed to the CN 1 via the Node-B 10 and the RNC 9 in a conventional way. Thus, only out-going calls are possible for this UE 14 located inside the determined area.

If the paging area does not correspond to said determined area or is not part of said determined area, the RRC paging message is broadcasted in the paging area in a conventional way as shown in FIG.2. The following of the call setup procedure can be performed in a conventional way, so as to establish the incoming call with the UE 14. In this case, of course, the UE 14 can also make an out-going call which will be routed to the CN 1 via the Node-B 10 and the RNC 9 in a conventional way. Thus, both incoming and out-going calls are possible for this UE 14 located outside the determined area.

As indicated above, the incoming calls inhibition in the determined area results from a command, i.e. information given to the relevant part of the radiocommunication network, in order to activate such incoming calls inhibition mode. Such command can advantageously be remotely sent to the relevant part of the CN (e.g. MSCs) or to the relevant RNCs for instance.

In an interesting application of the present invention, the command for inhibiting the incoming calls in a determined area may be given after a first bombing attack has occurred in this area, which can be a quarter, a city or a state for instance. Since no incoming call is routed in the area, responsive to the command, the risk that another bomb is remotely triggered by calling a radio terminal coupled to the bomb is thus limited. Moreover, since the out-going calls keep on being routed normally, the operation of the network is not disturbed too much. In particular, people having radio terminals can still call for help or emergency.

Of course, the incoming calls can be restored once the threat has disappeared. This can be achieved by a new command submitted to the relevant part of the radiocommunication network.

Many other applications are also possible within the framework of the present invention. For example, when a congress or exhibition place is entirely covered by a paging area, it is possible to command the inhibition of the incoming calls in this place, while the out-going calls are performed normally. This can be interesting especially when silence is required in the place. Indeed, ringing tones can thus be avoided in the place, while it is still possible to make out-going calls if necessary.

In a further embodiment of the invention, the filtering of the incoming calls takes account of the type of the incoming calls. It is performed upstream in the network architecture, compared to the above described cases. For instance, only the incoming calls resulting from a high level service unsolicited by radio terminals, e.g. a push service, can be inhibited.

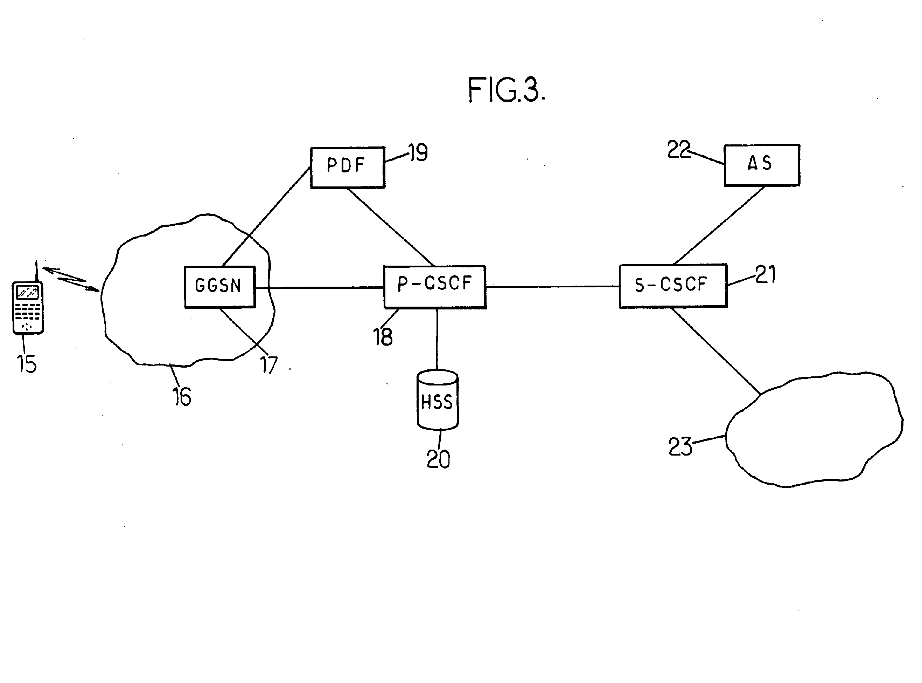

FIG.3 shows an example of a network architecture in which push services can be performed with respect to a radio terminal 15. The network comprises a radiocommunication network 16 such as a UMTS network for instance, as well as IMS ("IP Multimedia Subsystem", where IP designates "Internet Protocol") elements.

IMS architecture and functions are described in the technical specification TS 23.228, version 5.14.0, Release 5, "Digital cellular telecommunications system (Phase 2+); Universal Mobile Telecommunications System (UMTS); IP Multimedia Subsystem (IMS); Stage 2", published in September 2005 by the 3GPP, and in the technical specification TS 24.228, version 5.13.0, Release 5, "Digital cellular telecommunications system (Phase 2+); Universal Mobile Telecommunications System (UMTS); Signalling flows for the IP multimedia call control based on Session Initiation Protocol (SIP) and Session Description Protocol (SDP); Stage 3", published in June 2005 by the 3GPP.

Such network is arranged for the provision of multimedia services. It can allow a mobile wireless network operator to offer its subscribers multimedia services based on and built upon Internet applications, services and protocols.

As defined in the above mentioned specifications, the IMS network of FIG.3 thus includes a P-CSCF ("Proxy - Call Session Control Function") 18, which is connected to the gateway 17 of the UMTS network 16 called GGSN ("Gateway GPRS Support Node", where GPRS means "General Packet Radio Service") 17. The P-CSCF 18 is therefore the first contact point for the UE 15 within the IMS network. It can send and receive SIP messages to or from the UE 15, SIP ("Session Initiation Protocol") being a well known signalling protocol for Internet conferencing, telephony, event notification and instant messaging, developed by the IETF ("Internet Engineering Task Force").

The IMS network of FIG.3 further includes a S-CSCF ("Serving - Call Session Control Function") 21, connected to the P-CSCF 18, and which provides the session control services, i.e. which handles the session states, for the UE 15. The P-CSCF 18 or the S-CSCF 21 can also play the role of an I-CSCF ("Interrogating - Call Session Control Function") as defined in the above mentioned specifications, thus providing a contact point within the operator's network. The I-CSCF generally deals with registration, routing and forwarding of SIP messages and charging. The S-CSCF 21 of FIG.3 is further connected to an AS ("Application Server") 22, e.g. an email server. It is also connected to a network 23, which can be the PSTN ("Public Switched Telephone Network") for example. In this way, IP services and applications, such as VolP calls for example, can be performed with the UE 15.

Moreover, a PDF 19 ("Policy Decision Function") can manage the quality of service for the UE 15 and an HSS ("Home Subscriber Server") 20 can be used as an extension of the HLR ("Home Location Register") usually part of the mobile wireless networks, to store subscribers' information.

With such IMS network, the UE 15 can be provided with IP services and applications, after being registered to the S-CSCF 21.

So, first of all, the user of the UE 15 is registered to the S-CSCF 21. The IMS registration mechanism is described in section 6.2 of the above mentioned TS 24.228. During the registration phase, the P-CSCF 18 is the first SIP node seen by the UE 15 and it stays in the signalling path until the user of the UE 15 de-registers from IMS.

It should be noted that the REGISTER message used in the IMS registration mechanism, like other IMS SIP messages received by the P-CSCF from the UE, contains an indication of the current user location area and/or cell ID with respect to the UE. This information can be contained in the SIP parameter of the message header called "P-Access-Network-Info". It advantageously includes a concatenation of the following parameters : MCC ("Mobile Country Code"), MNC ("Mobile Network Code"), LAC ("Location Area Code") and cell ID.

The cell ID is not only present in the REGISTER message, but also in other SIP messages sent by the UE, e.g. at the very beginning of a SIP session set up, when the session is initiated by the network towards an IMS registered UE.

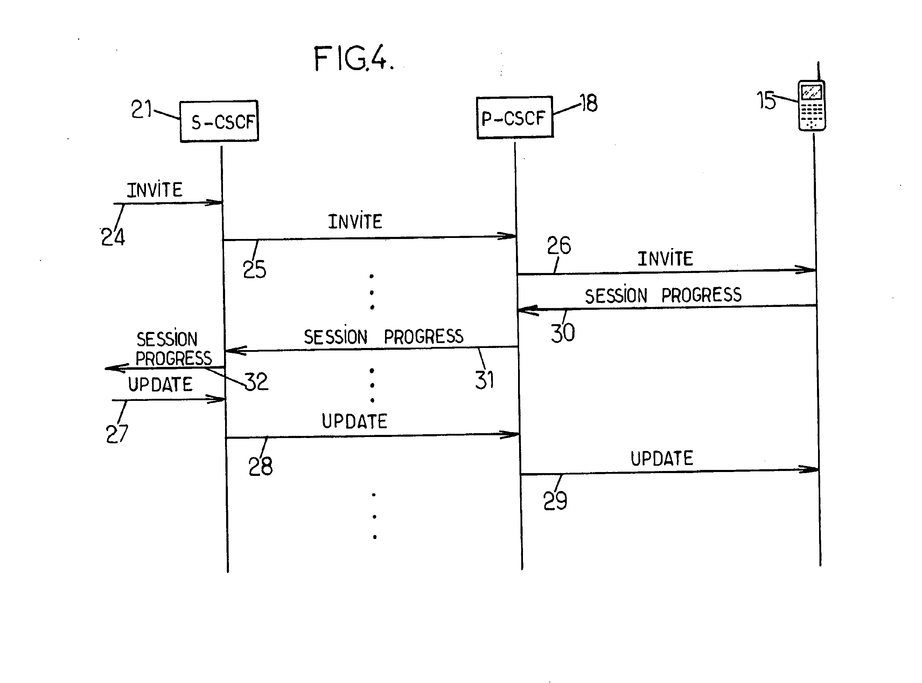

FIG.4 schematically shows some of the messages exchanged within the framework of a termination procedure applying to the UE 15 located in its home service area. The complete signalling is shown in section 7.4.3 of the above mentioned TS 24.228. Alternately, the UE 15 could be located in a visited network, in a roaming situation (see section 7.4.2.1 of the above mentioned TS 24.228).

As shown in FIG.4, a SIP INVITE request 24 is first received by the S-CSCF 21 from a calling party which could be the AS 22 of FIG.3 for instance. It is then forwarded (messages 25-26) to the UE 15 via the P-CSCF 18, and the radiocommunication network 16 (not represented in FIG.4). The INVITE message contains an initial SDP ("Session Description Protocol") message.

After several non-represented messages, in accordance with the above mentioned TS 24.228, the S-CSCF 21 receives a SIP UPDATE request 27 from the originating endpoint. This UPDATE is then forwarded (messages 28-29) to the UE 15 via the P-CSCF, and the radiocommunication network 16 (not represented in FIG.4).

Once the UPDATE message has been received by the UE 15 and the resource reservation is complete successfully, a session can be established between the calling party and the UE 15 as a terminating endpoint. Such session establishment can be assimilated to an incoming call intended for the UE 15 and routed via the radiocommunication network 16. In this way, the UE 15 can be provided with a particular service or application through an incoming call.

According to the invention, responsive to a command, the UPDATE message can be discarded before it is received by the UE 15. For example, responsive to the command, the S-CSCF 21 can ignore the received UPDATE request 27 and not forward it to the P-CSCF 18 (the message 28 is thus not transmitted). Alternately, responsive to the command, the P-CSCF could ignore the received UPDATE message 28 and not forward it to the UE 15 (the message 29 is thus not transmitted).

Alternately, the message INVITE 26 itself is not forwarded to the UE 15. Still alternately, any other message is not forwarded from the S-CSCF 21 or the P-CSCF 18 to the UE 15, so that the session is never completed with the UE 15.

In this way, the UE 15 is not totally informed of the incoming call intended for it, since the IMS session establishment is stopped before the end. The reception of no signalling message, such as the INVITE message 26 or the UPDATE 29, prevents from triggering an action in the UE 15, e.g. for making its tone ring or its buzzer vibrate.

In order to inhibit the incoming calls usually routed by the IMS elements in a determined area only, the P-CSCF 18 or the S-CSCF 21 can take into account information about the current location of the UE 15, such as a cell ID or a location area, received from the UE 15 in SIP messages. Advantageously, the location information is received at the P-CSCF 18 or at the S-CSCF 21 in a "session progress" SIP message 30 or 31 transmitted by the UE 15 after the reception of the INVITE message 26, as specified in TS 24.228 (where it is identified as "message 183"). Thus, only if the UE 15 is located in said determined area, it will not receive incoming calls from the IMS network, like in the previous examples.

Of course, the UE 15 can keep on making outgoing calls, even for an IP service using the IMS network as shown in FIG.3.

This embodiment has also the advantage that the incoming calls are filtered at a high level, i.e. upstream to the radiocommunication network 16. It is thus possible to prevent incoming calls from being performed from the IMS network, without affecting the operation of the mobile network itself. In particular, other incoming calls, independent from the IMS network, can keep on being routed.

## Claims

1. A method for controlling calls in a radiocommunication network arranged for routing incoming calls to radio terminals (14) and out-going calls from radio terminals (14), wherein, responsive to a command following the detection of an event, at least some of the incoming calls intended for radio terminals located in at least one determined area are prevented from being routed to said radio terminals by the radiocommunication network, while the out-going calls from radio terminals located in said at least one determined area keep on being routed by the radiocommunication network.

2. A method as claimed in claim 1, wherein the radiocommunication network comprises a core network (1) and a radio access network (2) and wherein said incoming calls are prevented from being routed by the core network.

3. A method as claimed in claim 2, wherein at least some of said incoming calls comprise incoming calls of the packet-switched type and are prevented from being routed by nodes of the core network (1) arranged for routing calls of the packet-switched type.

4. A method as claimed in claim 2 or 3, wherein at least some of said incoming calls comprise incoming calls of the circuit-switched type and are prevented from being routed by nodes of the core network (1) arranged for routing calls of the circuit -switched type.

5. A method as claimed in claim 1, wherein the radiocommunication network comprises a core network (1) and a radio access network (2) and wherein said incoming calls are prevented from being routed by the radio access network.

6. A method as claimed in any one of the foregoing claims, wherein a paging message to be broadcasted in a paging area is usually transmitted prior to the routing of an incoming call intended for a radio terminal located in said paging area, and wherein no paging message is transmitted when the paging area is at least part of said at least one determined area.

7. A method as claimed in claim 1, wherein an IP multimedia subsystem (19-23) is connected to the radiocommunication network in order to provide radio terminals with services through incoming calls and wherein incoming calls related to services intended for radio terminals (15) located in said at least one determined area are prevented from being routed by the IP multimedia subsystem.

8. A radiocommunication network comprising means for implementing the method as claimed in any one of the foregoing claims.

9. An equipment (4;9) of a radiocommunication network comprising means for participating in the implementation of the method as claimed in any one of claims 1 to 7.

## Patentansprüche

1. Verfahren zum Steuern von Anrufen in einem Funk-Kommunikationsnetzwerk, das eingerichtet ist zum Leiten eingehender Anrufe zu Funk-Endgeräten (14) und ausgehender Anrufe von Funk-Endgeräten (14), wobei in Reaktion auf eine Anweisung, die auf ein Erkennen eines Ereignisses folgt, durch das Funk-Kommunikationsnetzwerk verhindert wird, dass mindestens einige der eingehenden Anrufe, die für in mindestens einem bestimmten Gebiet befindliche Funk-Endgeräte bestimmt sind, an die Funk-Endgeräte geleitet werden, während die ausgehenden Anrufe von in dem mindestens einen bestimmten Gebiet befindlichen Funk-Endgeräten weiterhin von dem Funk-Kommunikationsnetzwerk geleitet werden.

2. Verfahren nach Anspruch 1, wobei das Funk-Kommunikationsnetzwerk ein Kern-Netzwerk (1) und ein Funk-Zugangsnetzwerk (2) umfasst, und wobei verhindert wird, dass die eingehenden Anrufe von dem Kern-Netzwerk geleitet werden.

3. Verfahren nach Anspruch 2, wobei mindestens einige der eingehenden Anrufe eingehende Anrufe des paketvermittelten Typs umfassen und daran gehindert werden, von Knoten des Kern-Netzwerks (1) geleitet zu werden, die dazu eingerichtet sind, Anrufe des paketvermittelten Typs zu leiten.

4. Verfahren nach Anspruch 2 oder 3, wobei mindestens einige der eingehenden Anrufe eingehende Anrufe des leitungsvermittelten Typs umfassen und daran gehindert werden, von Knoten des Kern-Netzwerks (1) geleitet zu werden, die dazu eingerichtet sind, Anrufe des leitungsvermittelten Typs zu leiten.

5. Verfahren nach Anspruch 1, wobei das Funk-Kommunikationsnetzwerk ein Kern-Netzwerk (1) und ein Funk-Zugangsnetzwerk (2) umfasst, und wobei verhindert wird, dass die eingehenden Anrufe von dem Funk-Zugangsnetzwerk geleitet werden.

6. Verfahren nach einem der vorstehenden Ansprüche, wobei eine Funkruf-Nachricht, die in einem Funkruf-Bereich per Broadcast zu übertragen ist, normalerweise vor dem Leiten eines eingehenden Anrufs übermittelt wird, der für ein Funk-Endgerät bestimmt ist, das sich in dem Funkruf-Bereich befindet, und wobei keine Funkruf-Nachricht übertragen wird, wenn der Funkruf-Bereich mindestens ein Teil des mindestens einen bestimmten Gebiets ist.

7. Verfahren nach Anspruch 1, wobei ein IP-Multimedia-Subsystem (19-23) mit dem Funk-Kommunikationsnetzwerk verbunden ist, um Funk-Endgeräten Dienste durch eingehende Anrufe bereitzustellen, und wobei eingehende Anrufe im Zusammenhang mit Diensten, die für Funk-Endgeräte (15) bestimmt sind, die sich in dem mindestens einen bestimmten Gebiet befinden, daran gehindert werden, von dem IP-Multimedia-Subsystem geleitet zu werden.

8. Funk-Kommunikationssystem umfassend Mittel zum Implementieren des Verfahrens nach einem der vorstehenden Ansprüche.

9. Vorrichtung (4; 9) eines Funk-Kommunikationssystems umfassend Mittel zum Teilnehmen an der Implementierung des Verfahrens nach einem der Ansprüche 1 bis 7.

## Revendications

1. Un procédé de contrôle des appels dans un réseau de communication configuré pour router des appels entrants vers des terminaux radio (14) et des appels sortants venant de terminaux radio (14), dans lequel, en réponse à une commande suivant la détection d'un évènement, au moins certains des appels entrants destinés à des terminaux radio situés dans au moins une zone déterminée sont empêchés d'être routés vers lesdits terminaux radio par le réseau de radiocommunication, tandis que les appels sortants provenant de terminaux radio situés dans ladite au moins une zone déterminée continuent à être routés par le réseau de radiocommunication.

2. Un procédé selon la revendication 1, dans lequel le réseau de radiocommunication comprend un coeur de réseau (1) et un réseau d'accès radio (2) et dans lequel lesdits appels entrants sont empêchés d'être routés par le coeur de réseau.

3. Un procédé selon la revendication 2, dans lequel au moins certains desdits appels entrants comprennent des appels entrants du type à commutation de paquets et sont empêchés d'être routés par des noeuds du coeur de réseau (1) configurés pour router des appels du type à commutation de paquets.

4. Un procédé selon la revendication 2 ou 3, dans lequel au moins certains des appels entrants comprennent des appels entrants du type à commutation de circuits et sont empêchés d'être routés par des noeuds du coeur de réseau (1) configurés pour router des appels du type à commutation de circuits.

5. Un procédé selon la revendication 1, dans lequel le réseau de radiocommunication comprend un coeur de réseau (1) et un réseau d'accès radio (2) et dans lequel lesdits appels entrants sont empêchés d'être routés par le réseau d'accès radio.

6. Un procédé selon l'une des revendications précédentes, dans lequel un message de paging à multidiffuser dans une zone de paging est émis habituellement avant le routage d'un appel entrant destiné à un terminal radio situé dans ladite zone de paging, et dans lequel aucun message de paging n'est émis lorsque la zone de paging est au moins une partie de ladite au moins une zone déterminée.

7. Un procédé selon la revendication 1, dans lequel un sous-système multimedia IP (19-23) est relié au réseau de radiocommunication afin d'alimenter les terminaux radio par des services via des appels entrants et dans lequel les appels entrants concernant des services destinés à des terminaux radio (15) situés dans ladite au moins une zone déterminée sont empêchés d'être routés par le sous-système multimédia IP.

8. Un réseau de radiocommunication comprenant des moyens pour implémenter le procédé selon l'une des revendications précédentes.

9. Un équipement (4,9) d'un réseau de radiocommunication comprenant des moyens pour participer à l'implémentation du procédé selon l'une des revendications 1 à 7.
